Europäisches Patentamt

European Patent Office

Office européen des brevets

(11) Numéro de publication: **0 145 565**
A1

(12) ## DEMANDE DE BREVET EUROPEEN

(21) Numéro de dépôt: **84402357.2**

(22) Date de dépôt: **20.11.84**

(51) Int. Cl.⁴: **E 02 F 5/14**, G 05 D 1/02, E 02 F 9/20

(30) Priorité: **28.11.83 FR 8318909**

(43) Date de publication de la demande: **19.06.85 Bulletin 85/25**

(84) Etats contractants désignés: **DE GB NL**

(71) Demandeur: **SYNDICAT NATIONAL DES ENTREPRISES DE DRAINAGE, ZA de Courtaboeuf Immeuble ATLAS Avenue de la Baltique, F-91940 Les Ulis (FR)**

(72) Inventeur: **Goyet, Noel, 4, Place Charles Fillion, F-75017 Paris (FR)**

(74) Mandataire: **Tony-Durand, Serge, Cabinet Tony-Durand 22, Boulevard Voltaire, F-75011 Paris (FR)**

(54) **Procédé et appareillage pour le guidage automatique des engins de terrassement, notamment d'une machine de pose d'éléments de drainage.**

(57) Conformément au présent procédé on enregistre au préalable, sous forme numérique et sur un support magnétique mobile (S), l'ensemble des données planimétriques et altimétriques des travaux à réaliser, en référence à des points de repère et à un plan de référence. On dispose ensuite sur le terrain des balises fixes (9) destinées à matérialiser sur place les points de repère choisis ainsi qu'un émetteur de rayon laser tournant, apte à définir le plan de référence voulu. Quant à l'engin de terrassement (11), à guider, il comporte un module de commande à microprocesseur susceptibles de lire les indications enregistrées sur le support magnétiques utilisé, et de commander en conséquence deux modules de guidage: l'un pour le guidage planimétrique de l'engin, et l'autre pour le guidage altimétrique de l'outil (13) de terrassement de cet engin. Or, ces deux modules de commande sont aptes à agir respectivement sur la commande de direction de l'engin (11) et sur le système de commande de la position en hauteur de l'outil (13) et ce, en référence aux balises fixes (9) de repère et au plan défini par le rayon laser tournant.

"Procédé et appareillage pour le guidage automatique des engins de terrassement, notamment d'une machine de pose d'éléments de drainage"

La présente invention concerne le guidage des engins de terrassement et notamment des machines utilisées pour la pose d'éléments de drainage.

Les machines de ce genre sont utilisées pour réaliser le drainage d'un terrain agricole en enfouissant dans le sol, d'une part une série de drains disposés parallèlement pour assurer le captage des eaux en excès dans le sol, et d'autre part, des conduites collectrices, disposées transversalement aux drains et sur lesquelles ceux-ci sont raccordés afin d'assurer l'évacuation des eaux drainées jusqu'à un exutoire   A cet effet ces machines comportent un coutre destiné à former un sillon dans le sol, ainsi qu'un système de pose d'éléments de drainage, lequel est apte à les déposer derrière ce coutre pour qu'ils se trouvent enfouis dans le sol. Cependant,pour que les eaux captées puissent s'écouler dans les drains puis dans les conduites collectrices, il convient de prévoir une pente convenable de ces divers éléments de drainage jusqu'à l'exutoire.

Dans ces conditions tout chantier de drainage doit faire l'objet d'une étude donnant lieu à l'établissement d'un projet préalable déterminant le tracé planimétrique de chaque drain ou collecteur avec son profil altimétrique. Pour chaque tronçon de drain ou de collecteur, ce projet est défini par :

    - les coordonnées planimétriques de son origine et de son extrémité,

    - l'altitude de son origine (ou sa profondeur par rapport au terrain naturel),

    - la pente et la longueur des segments constitutifs du profil en long.

Ce projet mentionne également les coordonnées planimétriques de certains points donnant lieu à des opérations particulières, par exemple un changement de nature du matériau employé (changement de diamètre du tuyau, emploi d'un tuyau perforé ou non), ou bien encore l'adjonction d'un accessoire déterminé : par exemple un regard de visite, etc.

Lors de la pose des éléments de drainage, il convient que la machine de pose soit convenablement guidée sur le terrain pour effectuer une série de parcours correspondant aux emplacements prévus pour les divers éléments de drainage et que par ailleurs le niveau de son outil de pose dans le sol soit réglé pour respecter le profil prévu pour ces éléments de drainage.

Actuellement la méthode employée consiste à matérialiser à l'avance sur le terrain, au moyen de jalons et par les procédés topographiques classiques, l'ensemble des points caractéristiques du tracé planimétrique du projet à réaliser. Il suffit donc ensuite au conducteur de la machine de pose de suivre à vue l'alignement des jalons correspondants pour respecter le tracé planimétrique.

Quant au respect du profil altimétrique, il est assuré sur le terrain par rapport à un plan de référence, incliné sur l'horizontale,et qui est engendré par un émetteur de rayon laser tournant. A cet effet l'outil de pose comporte un récepteur apte à détecter le passage de ce rayon. Dans ces conditions le conducteur de la machine de pose doit relever, sur le plan du projet à exécuter, la pente du tronçon concerné et adapter en conséquence la pente de guidage impartie par l' émetteur de rayon laser. Après cette adaptation préalable, l'équipement prévu assure un maintien automatique de l'outil de pose selon la pente choisie.

Cette méthode nécessite donc un grand nombre d'opérations préalables, ce qui grève d'autant le prix de revient des travaux de drainage. Parmi ces opérations,les plus longues sont évidemment celles relatives à la matérialisation sur le terrain du tracé planimétrique   par pose d'un nombre suffisant de jalons.

C'est pourquoi la présente invention a pour but de supprimer ces différentes opérations préalables de jalonnement ainsi que les opérations d'adaptation de la position de l'outil de pose.

A cet effet elle a pour objet un procédé de guidage automatique d'une machine de pose d'éléments de drainage ou de tout autre engin de terrassement devant effectuer des travaux similaires. Ce procédé est essentiellement caractérisé en ce qu'il comprend les opérations suivantes, consistant :

a) à enregistrer au préalable, sous forme numérique et sur un support magnétique amovible (disque, cassette..),l'ensemble des données planimétriques et altimétriques des travaux à réaliser, en référence à des points de repère et à un plan de référence, qui sont choisis de façon arbitraire ;

b) à disposer sur le terrain des balises fixes destinées à matérialiser sur place les points de repère choisis ainsi qu'un émetteur de rayon laser tournant, apte à définir le plan de référence voulu ;

c) à installer, sur l'engin de terrassement, un module de commande à microprocesseur susceptible de lire les indications enregistrées sur le support magnétique utilisé, et de commander en conséquence deux modules de guidage :

- l'un pour le guidage planimétrique de l'engin correspondant ,

- et l'autre pour le guidage altimétrique de l'outil de terrassemement de cet engin ,

ces deux modules de commande étant aptes à agir respectivement sur la commande de direction de l'engin et sur le système de commande de la position en hauteur de l'outil de terrassement et ce, en référence aux balises fixes de repère et au plan défini par le rayon laser tournant. Ainsi l'engin de terrassement, par exemple une machine de pose d'éléments de drainage, se trouve guidée sur le terrain de façon que lui-même et son outil de pose ou de travail respectent à la fois le tracé planimétrique et le tracé altimétrique du projet à exécuter.

Cependant, l'invention a également pour objet un appareillage de commande spécialement conçu pour la mise en oeuvre du présent procédé. Les différentes particularités de cet appareillage et de ce procédé apparaîtront au cours de la description suivante. Celle-ci est donnée en référence au dessin annexé à simple titre indicatif, et sur lequel :

La figure 1 représente schématiquement un exemple de plan de projet à exécuter pour la pose d'éléments de drainage ;

La figure 2 est un diagramme de l'appareillage prévu pour la mise en oeuvre du procédé de guidage selon l'invention ;

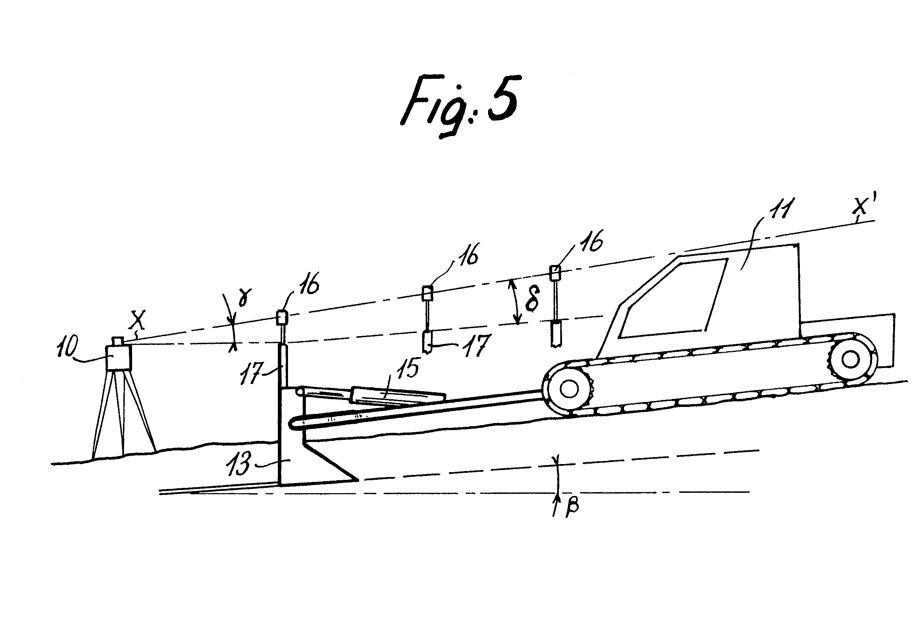

La figure 3 est une vue schématique en perspective illustrant le mode de guidage planimétrique d'une machine de pose lors de l'application de ce procédé ;

La figure 4 est une vue similaire illustrant le mode de guidage altimétrique de l'outil de pose de cette même machine ;

La figure 5 est une vue schématique en élévation, à échelle différente, illustrant également ce second mode de guidage.

Comme déjà indiqué , la première opération de mise en oeuvre du procédé selon l'invention consiste à enregistrer, sous forme numérique et sur un support magnétique mobile (disque, cassette), l'ensemble des données planimétriques et altimétriques des travaux à réaliser.

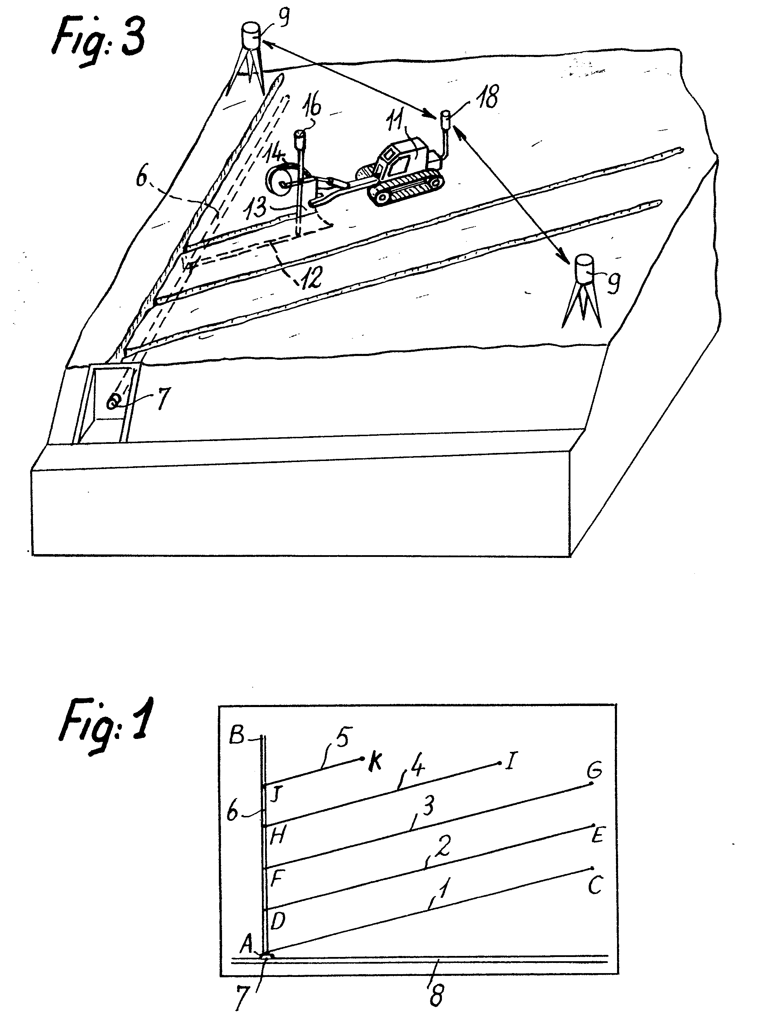

Ces données sont regroupées par séquences successives correspondant aux divers tronçons rectilignes du projet à exécuter, par exemple un projet de drainage tel que celui illustré à la figure 1. Ce projet peut comporter une série de drains parallèles 1 , 2.....5 branchés sur un collecteur transversal 6 dont l'extrémité inférieure 7 constitue un exutoire débouchant dans un fossé 8. Les points caractéristiques d'un tel projet sont donc d'une part les extrémités A et B du collecteur 6 et les extrémités C , D... K des différents drains.

Les coordonnées planimétriques et altimétriques de ces différents points caractéristiques sont enregistrés par rapport à des paramètres de référence qui consistent :
- d'une part en deux points de référence arbitrairement choisis et qui seront matérialisés ultérieurement sur le terrain par deux balises 9 émettrices d'ondes radar ;
- d'autre part en un plan de référence, également choisi de façon arbitraire,et qui sera ultérieurement matérialisé sur le terrain par un émetteur 10 d'un rayon laser tournant.

De préférence on enregistre également les coordonnées planimétriques des différents points où doivent être réalisées des interventions particulières. Ces interventions pouvant porter par exemple sur un changement de la nature des éléments de drainage ou sur l'adjonction de certains accessoires etc...

Outre les deux balises 9 déjà mentionnées et l'émetteur 10 de rayon laser, l'appareillage destiné à assurer la mise en oeuvre du procédé de guidage selon l'invention comprend plusieurs modules de commande et appareils annexes qui sont installés

0145565

sur l'engin à guider, en l'occurence dans le cas présent une machine 11 de pose de drains, apte à assurer la pose d'éléments de drainage 12 de la façon habituelle. Celle-ci consiste en un engin auto-moteur monté sur chenilles,à l'extrémité arrière duquel est attelé un outil de pose désigné par la référence générale 13. Cet outil est apte à tracer un sillon dans le sol et il est associé à un système de pose qui assure le dévidemment d'un tuyau flexible 14 et la pose de celui-ci dans le fond du sillon correspondant et ce, au fur et à mesure de l'avancement de l'ensemble. Les moyens d'attelage de l'outil de pose 13 comprennent un mécanisme permettant de régler la position en hauteur de celui-ci, par exemple grâce à un ou plusieurs verrin (s) de commande 15.

De plus cet outil est équipé d'un récepteur 16 apte à détecter le passage du rayon laser tournant émis par l'émetteur 10. Ce récepteur est monté à l'extrémité supérieure d'un mât télescopique 17 dont la hauteur est susceptible d'être modifiée par un mécanisme de manoeuvre non représenté . Par l'intermédiaire d'un circuit de commande approprié , ce récepteur est apte à actionner le système de commande de la position en hauteur de l'outil de pose 13.

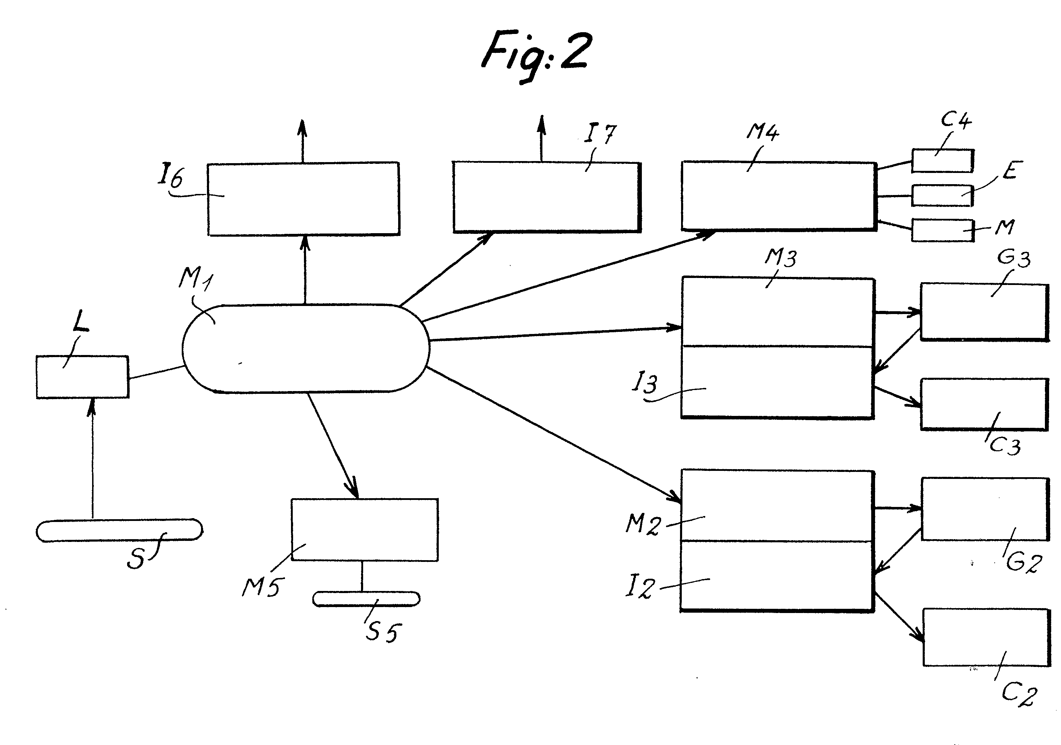

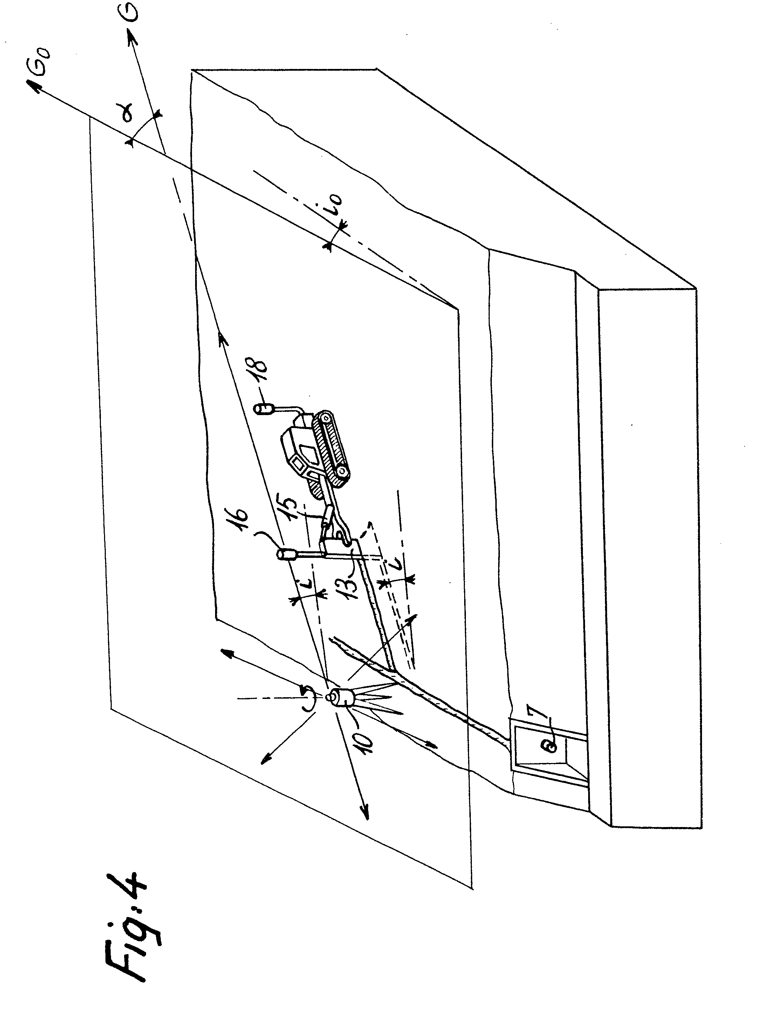

Quant à l'engin 11, il est équipé d'un récepteur 18 apte à capter les ondes radar émises par les deux balises fixes 9. Ce récepteur permet ainsi de déterminer par trilatération, la position de cet engin par rapport à ces deux balises selon la méthode actuellement employée pour le guidage des navires dans un chenal. L'appareillage installé sur l'engin mobile 11 comprend un module de commande à microprocesseur,désigné par la référence M1 sur le diagramme de la figure 2. Ce module est associé à un système de lecture L destiné à recevoir le support magnétique S sur lequel ont été préalablement enregistrées les différentes caractéristiques du projet à exécuter. Ce lecteur est apte à transmettre,au module de commande M1 ,les données figurant sur ce support magnétique.

Pour sa part, ce module est en mesure d'interpréter ces données pour commander en conséquence les divers modules d'application qui sont asservis à celui-ci.

Ainsi le module M1 effectue un tri entre les données reçues pour transmettre les données planimétriques à un module M2 de guidage planimétrique et les données altimétriques à un module M3 de guidage altimétrique.

Le premier de ces deux modules d'application comprend par ailleurs les balises 9 ainsi que le récepteur 18 déjà mentionnés, lesquels constituent un système de repérage et de guidage de position désigné par la référence générale G2 sur le diagramme de la figure 2. Cependant ce module comprend également un interface I2 de guidage planimétrique qui est relié d'une part au système de repérage de position G2 et d'autre part, au système C2 assurant la commande de la direction de l'engin 11.

Dans ces conditions ce module M2 est en mesure d'assurer le guidage automatique de la trajectoire suivie par celui-ci pour exécuter les divers parcours prévus dans le projet des travaux à réaliser et ce, en se repérant sur les deux balises 9.

Quant au module M3 de guidage altimétrique, il comprend l'émetteur 10 de rayon laser et le récepteur correspondant 16 qui constituent ensemble un système de repérage et de guidage de la position en hauteur de l'outil de pose, ce système étant désigné par la référence G3 sur le diagramme de la figure 2.

Cependant le module M3 comprend également un interface I3 de guidage altimétrique. Celui-ci actionne le mécanisme de manoeuvre du mât télescopique 17 portant le récepteur 16 de façon à faire varier régulièrement la hauteur de ce dernier par rapport à l'outil pour que celui-ci suive une ligne présentant, avec le plan de référence défini par le rayon laser tournant provenant de l'émetteur 10, un écart de pente donné et ce, en fonction des instructions provenant du module de commande M1.

Ce dernier commande également un module de signalisation M4 destiné à signaler certaines interventions particulières devant être effectuées au cours des travaux ou par la suite. Ce module comprend un avertisseur sonore C4 destiné à prévenir le conducteur de l'engin lorsqu'une intervention manuelle est nécessaire, un écran E de visualisation assurant l'affichage de la nature de cette intervention et un dispositif de marquage M apte à matérialiser la position de certaines opérations sur le terrain en traçant des marques sur celui-ci. Bien entendu le module M4 de marquage et de visualisation est asservi au module M1 de commande qui lui transmet toutes les données qui lui sont afférentes.

Ce module de commande peut également contrôler un module M5 d'enregistrement servant à transférer, en continu, sur un support magnétique S5 les coordonnées planimétriques et altimétriques qui ont été réellement suivies au cours de l'exécution des travaux. Ceci permettra ultérieurement la réalisation automatique du pland'exécution du chantier sur une table à tracer.

L'appareillage selon l'invention comprend également des interfaces spécifiques, notamment un interface I6 pour la commande de la mise en marche et de l'arrêt de l'engin mobile 11, un interface I7 pour commander le relevage de l'outil de pose 13 à la fin de chaque tronçon et sa mise en place au début du tronçon suivant à la profondeur prévue d'après les données enregistrées et qui sont transmises par le module de commande M1.

Pour la mise en oeuvre du présent procédé sur le terrain au moyen de l'appareillage décrit ci-dessus, il convient de disposer tout d'abord sur celui-ci les deux balises 9 destinées à servir de points fixes de référence ainsi que l'émetteur 10 de rayon laser.

Quant à l'émetteur 10, il doit être disposé de façon que son plan de référence soit grossièrement parallèle au terrain naturel, c'est-à-dire que la valeur et la direction de sa plus grande pente coïncident avec celles du terrain naturel. Il convient ensuite d'assurer la saisie, sur le module de commande M1, des points d'installation des balises fixes 9 et des caractéristiques du plan de référence défini par le rayon laser tournant (valeur et orientation de sa plus frande pente).

Après ces opérations préliminaires, l'appareillage selon l'invention est en mesure d'assurer toutes les opérations voulues de guidage. En effet le module M1 de commande communique au module M2 de guidage planimétrique les coordonnées des points d'ori-

8            0145565

gine et d'extrémité de chaque tronçon des drains, puis en cours de déplacement, ce module M2 calcule les coordonnées exactes de l'engin et les compare à celles de la trajectoire prévue pour corriger en conséquence la trajectoire de l'engin en agissant sur le système de commande de celui-ci par l'intermédiaire de l'interface I2.

Par ailleurs, le module de commande M1 contrôle les commandes en hauteur de l'outil 13 pour placer celui-ci à l'altitude prévue en début de tronçon. Puis ce module communique au module M3 de guidage altimétrique la valeur de la pente du premier segment du profil en long du tronçon, et celui-ci calcule et impose au système d'incrémentation du récepteur laser le différentiel de guidage altimétrique, par rapport au plan de référence laser, qui est nécessaire pour respecter cette pente.

A ce sujet il convient de noter que la phase d'**initialisation** du présent appareillage permet de garder en mémoire la valeur $i_0$ de la plus grande pente du plan de référence du rayon laser tournant, et le gisement $G_0$ de son orientation (voir figure 4). Pendant le travail, la connaissance du gisement G de la direction du tronçon (calculé à partir des coordonnées des points d'origine et d'extrémité du tronçon) permet au module M3 de guidage altimétrique de calculer la valeur i de la pente de guidage imposée par le rayon laser tournant, par la formule trigonométrique :

$$i = i_0 \ \times \ \cos (G - G_0).$$

De plus, si le plan de référence du rayon laser tournant impose une pente de guidage i, et si l'on veut imposer à l'outil une pente de pose I, le système d'incrémentation contrôlé par le module M3 de guidage altimétrique permet d'imposer au mât télescopique 17 du récepteur 16 un allongement ou un raccourcissement régulier correspondant au différentiel de guidage, c'est-à-dire (I-i) exprimé en mm/m. (Voir figure 5).

Par ailleurs, ainsi qu'il a déjà été indiqué, le module M4 assure, au cours des travaux, la signalisation des interventions particulières qui doivent être effectuées. Enfin, le module M5 permet l'enregistrement des caractéristiques exactes des travaux

0145565

réellement effectués pour pouvoir dresser un plan d'exécution des ouvrages réalisés.

Dans ces conditions le procédé et l'appareillage selon l'invention permettent effectivement d'assurer automatiquement toutes les opérations de guidage voulues en évitant tous les inconvénients inhérents aux méthodes actuellement utilisées pour l'exécution des travaux de drainage. Cependant ce procédé et cet appareillage peuvent également être utilisés pour l'exécution d'autres travaux de terrassement pour lesquels il existe des problèmes similaires, par exemple la pose de câbles ou de canalisations souterraines, et, plus généralement, tous les terrassements en déblais.

Par ailleurs l'appareillage selon l'invention n'est pas limité à l'exemple de réalisation décrit précédemment et il peut faire l'objet de diverses variantes et modifications, notamment en fonction de la nature exacte des travaux à effectuer. Ainsi en ce qui concerne le système de repérage de la position de l'engin de terrassement, il est possible d'utiliser, à la place des balises émettant des ondes radar, trois balises émettant des ondes radio-électriques de type différent, la détermination de position étant alors assuré par radio-goniométrie.

# REVENDICATIONS

1 - Procédé de guidage automatique d'un engin de terrassement, et notamment d'une machine pour la pose d'éléments de drainage, selon des dispositions planimétriques et des profils altimétriques déterminés, caractérisé en ce qu'il comprend les opérations suivantes, consistant :

a) à enregistrer au préalable, sous forme numérique et sur un support magnétique mobile (S)(disque, cassette,...), l'ensemble des données planimétriques et altimétriques des travaux à réaliser, en référence à des points de repère et à un plan de référence, qui sont choisis de façon arbitraire ;

b) à disposer sur le terrain des balises fixes (9) destinées à matérialiser sur place les points de repère choisis ainsi qu'un émetteur (10) de rayon laser tournant, apte à définir le plan de référence voulu ;

c) à installer, sur l'engin de terrassement (11), un module de commande à microprocesseur susceptible de lire les indications enregistrées sur le support magnétique (S) utilisé, et de commander en conséquence deux modules de guidage :

 - l'un (M2) pour le guidage planimétrique de l'engin correspondant ;

 - et l'autre (M3) pour le guidage altimétrique de l'outil (13) de terrassement de cet engin,

ces deux modules de commande étant aptes à agir respectivement sur la commande de direction de l'engin (11) et sur le système de commande de la position en hauteur de l'outil (13) de terrassement et ce, en référence aux balises fixes (9) de repère et au plan défini par le rayon laser tournant.

2 - Procédé de guidage selon la revendication 1, caractérisé en ce que, sur le support magnétique (S) utilisé, on enregistre également la position sur le terrain de certaines opérations particulières à effectuer et on ajoute, aux éléments constitutifs de l'appareillage de commande installé sur l'engin de terrassement, un dispositif de marquage au sol apte à matérialiser sur le sol l'emplacement des opérations particulières ainsi prévues.

3 - Appareillage de commande destiné à être installé sur un engin de terrassement pour assurer son guidage automatique par application du procédé selon la revendication 1, caractérisé en ce qu'il comprend en combinaison :

a) un module de commande (M1) à microprocesseur susceptible de lire les indications figurant sur un support magnétique (S) utilisé pour l'enregistrement préalable de l'ensemble des données planimétriques et altimétriques des travaux à réaliser ;

b) un module de guidage planimétrique (M2) asservi à ce module de commande (M1) et apte à agir sur la commande de direction de l'engin de terrassement (11) en référence à des points fixes de repère constitués par des balises (9) préalablement mises en place sur le terrain ;

c) un module de guidage altimétrique (M3), également asservi à ce module de commande (M1) et apte à agir sur le système de commande de la position en hauteur de l'outil de travail (13) en référence au plan défini par un rayon laser tournant provenant d'un émetteur approprié (10), préalablement mis en place sur le terrain pour définir un plan de référence.

4 - Appareillage selon la revendication 3, caractérisé en ce qu'il comprend un module (M4) de signalisation, également asservi au module de commande (M1), et qui est en mesure de signaler certaines interventions particulières à effectuer sur le terrain, ce module commandant, entre autres un dispositif de marquage au sol, assurant le marquage de l'emplacement de certaines opérations particulières.

5 - Appareillage selon la revendication 3 ou 4, caractérisé en ce qu'il comprend un module (M5) d'enregistrement des données planimétriques et altimétriques des travaux effectivement réalisés sur le terrain, ce module assurant cet enregistrement sur un support magnétique mobile (S5) permettant la réalisation automatique, sur table à tracer, du plan d'exécution du chantier.

6 - Appareillage selon l'une des revendications 3 à 5, caractérisé en ce que les balises (9), associées au module (M2) de guidage planimétrique,sont aptes à émettre des ondes radio-électriques, par exemple des ondes radar, et ce module (M2) comporte un système (G2) de repérage de position de l'engin de terrassement correspondant (11) d'après ces émissions qui sont captées par un récepteur (18) installé sur cet engin.

7 - Appareillage selon la revendication 6, caractérisé en ce que le module (M2) de guidage planimétrique contrôle un interface (I2) commandant le système (C2) de commande de direction de l'engin de terrassement correspondant (11).

8 - Appareillage selon l'une des revendications 3 à 7, caractérisé en ce que le module (M3) de guidage altimétrique de l'outil de travail (13) comporte un récepteur (16) apte à capter le rayon laser tournant provenant de l'émetteur (10) placé sur le terrain, ce récepteur étant fixé sur une perche télescopique (17) portée par l'outil de travail, et dont la hauteur peut être réglée par un mécanisme commandé par le module (M3) de guidage altimétrique.

9 - Appareillage selon la revendication 8, caractérisé en ce que le module (M3) de guidage altimétrique contrôle un interface (I3) commandant le système (G3) de commande du niveau en hauteur de l'outil de travail (13).

Fig. 3

Fig. 1

Fig:2

2/4

0145565

Fig. 4

0145565

# Fig. 5

Office européen
des brevets

**RAPPORT DE RECHERCHE EUROPEENNE**

0145565

Numéro de la demande

EP 84 40 2357

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 520 185  (PRECICULTURE)<br><br>* Page 5, ligne 13 - page 7, ligne 27; figures 2,3 * | 1,3,6 9 | E 02 F    5/14<br>G 05 D    1/02<br>E 02 F    9/20 |
| | --- | | |
| Y | US-A-4 244 123  (LAZURE)<br><br>* Colonne 4, ligne 28 - colonne 6, ligne 49; figures 1-3,6 * | 1,3,6 9 | |
| | --- | | |
| A | DE-A-3 107 674  (MAN)<br><br>* Revendications; figure 1 * | 1,3,6 9 | |
| | --- | | |
| A | FR-A-2 195 800  (WILLNER) | | |
| | --- | | **DOMAINES TECHNIQUES RECHERCHES (Int. Cl.4)** |
| A | GB-A-1 485 180  (DECCA) | | |
| | --- | | |
| A | US-A-3 046 681  (KUTZLER) | | E 02 F<br>G 05 D |
| | ----- | | |

Le présent rapport de recherche a été établi pour toutes les revendications

| Lieu de la recherche | Date d'achèvement de la recherche | Examinateur |
|---|---|---|
| LA HAYE | 25-02-1985 | RAMPELMANN J. |